# EUROPEAN PATENT APPLICATION

(11) **EP 2 952 870 A1**
(43) Date of publication of application: **09.12.2015**
(21) Application number: 15166265.7
(22) Date of filing: 04.05.2015
(51) Int. Cl.: G01M 13/04

(54) **WIRELESS SENSOR MODULE**

(30) Priority: 26.05.2014 GB 201409307
(71) Applicant: Aktiebolaget SKF, 415 50 Göteborg (SE)
(72) Inventor: Campbell, Andrew, EAST KILBRIDE, G75 9GS (GB); Murray, Brian, Aberdeen, Aberdeenshire AB31 4JR (GB); Sansom, Mark David, South Livingston, EH54 7ED (GB)
(74) Representative: Tweedlie, Diane Harkness

(57) **Abstract**

The invention relates to a sensor module for monitoring bearings in steel industry applications comprising an embedded portion (12a) for being fitted into a hole (22) in a bearing component (10) of the bearing to be monitored, wherein the embedded portion (12a) comprises at least one sensor (34a, 34b, 36, 38).

It is proposed that the embedded portion (12a) further comprises a clamping mechanism (30) generating clamping force acting on at least two opposing lateral internal faces of the hole (22).

## Description

### Technical Field

The invention relates to a sensor module for use in continuous caster bearings and to a condition monitoring and/or process control system for use in the steel industry.

### Technical Background

The environment of a steel manufacturing facility is extremely harsh with high temperatures, large volumes of water and high shock loads. Traditionally it has been difficult to monitor aspects of the process relating to bearings where the equipment is exposed to this environment.

Condition monitoring of continuous caster bearings or other bearings in the steel industry is desirable because the bearings suffer damaging and unpredictable failures. However, condition monitoring is rarely applied in this field of application because of the difficulties of accessing and cabling in the hostile operating environment. Human access is impossible during plant operation, and the high temperatures and high radiant heat fluxes make cabling difficult. This is compounded by the frequent requirement to disassemble the plant for maintenance during which cabling is likely to be damaged.

There are no known solutions for condition monitoring in continuous casters. In other applications, wireless condition monitoring sensors are being piloted as a cost effective way of monitoring bearings.

### Summary of the Invention

The current invention solves the problem of providing a compact and robust and reliable sensor arrangement suitable for use in bearings in steel industry applications. A further aspect of the invention relates to the provision of a reliable connection of the sensors to the structure to record load, vibration, acoustic emission and temperature in continuous caster bearings, while deploying the electronics in a replaceable module.

The invention relates to a sensor module for monitoring bearings in steel industry applications comprising an embedded portion for being fitted into a hole in a bearing component of the bearing to be monitored, wherein the embedded portion comprises at least one sensor.

It is proposed that the embedded portion further comprises a clamping mechanism generating clamping force acting on at least two opposing lateral internal faces of the hole. The clamping mechanism proposed by the invention allows for a reliable transmission of the load and well as ensuring good signal coupling and ensuring that the module is fully secured. This improves the signal acquisition for reliably transferring a portion of the bearing load to the sensor module.

Embedding at least a portion of the module into the bearing component provides a number of benefits including better signal acquisition and greater protection from the environment.

The bearing component may be a bearing ring or a bearing housing, in particular a bearing housing of a continuous caster bearing. There are a number of processes in the steel manufacturing industry that require some form of bearing arrangement to move or process the steel. These include rolling mills, continuous casters, turrets and ladles, conveyors etc. The bearing types used in each of these applications vary from small spherical roller bearings, through larger 4-row taper roller bearings to large slewing bearings. The common feature in all of these is that they operate in harsh environments that involve high temperatures, large volumes of water/solvents and high loads including shock loads. The invention is applicable to all of these applications. As the sensors and other electronic components are arranged close to the bearing, they are subjected to temperatures similar to those of the bearing in operation. The oil or grease of the bearing must be kept below roughly 100 °C and as such the components are chosen so as to be able to operate up to around that same temperature.

In a preferred embodiment of the invention, the clamping mechanism comprises a clamping ring with at least one conical inner surface interacting with at least one conical inner part and means for pressing the conical inner part into the clamping ring for widening the clamping ring. The cone bridge made up by the clamping ring and the preferably two opposing conical inner parts is used to clamp the module tightly against the internal faces of the hole. Preferably, the clamping ring and the conical inner parts are made of steel in order to achieve the desired robustness.

The invention encapsulates all aspects of the sensor into a single modular package that can easily be inserted into a pre-prepared hole in the bearing housing.

According to a further aspect of the invention, it is proposed that the at least one sensor is directly bonded to the clamping ring. The excellent thermal and mechanical contact between the clamping ring and the inner wall faces of the bearing component will therefore immediately lead to a reliable and robust detection of temperature and strain.

Preferably, the sensor module comprises at least two strain bridges bonded to the clamping ring and connected so as to form a resistive bridge. This helps to provide strain measurements that are less affected by drift due to environmental changes.

In a preferred embodiment of the invention, piezo sensors are mounted inside the module to enable acquisition of key bearing operating parameters including load, acoustic emission and vibration. These sensors are mounted in such a way as to ensure good coupling with the bearing housing to allow for high-quality signal transmission while at the same time being robust against the temperature and shocks.

In a preferred embodiment of the invention, the module further comprises a wireless transceiver for exchanging data with an electronic processing system. Preferably, at least an antenna of the wireless transceiver is arranged outside of the hole. The wireless transceiver is preferably connected to a remote electronic processing system. This transceiver allows the module to become connected to a network, preferably a local mesh network using low-power using robust/resilient communication protocols. Thanks to the wireless transceiver, commands and configuration information may be sent to the module from a control system and acquired data may be sent from the module back to the control system.

In a preferred embodiment of the invention, the module further comprises an energy harvesting circuit for harvesting power from a local environment. Preferably, the energy harvesting circuit comprises a thermoelectric generator. This may in particular include harvesting energy from the large temperature differentials that may be present. Also, by removing the need for cabling, the installation costs, maintenance costs and robustness of the system are all improved. Addition of thermal power harvesting may be combined with high temperature primary cells to act as backup when the thermal gradient is too low. For example, the temperature difference between the internal bearing housing and the external steel manufacturing environment may be used to generate power through a thermo-electric generator. Other power generation options also exist such as using the rotation of the bearing/shaft or through a water turbine generator linked into the housing cooling supply. Energy can be harvested from this system when the temperature gradient is of sufficient size. This occurs when the hot steel is passing through the process. This is also the time when data needs to be acquired. When the steel has passed, the temperature gradient will reduce, but also will the need to acquire data. The module may further comprise a data storage for storing data until it may be read out or transmitted.

It is further proposed that the module is provided with a large capacitor that is able to store enough energy to run the system for a short period of time. This may be used as part of the power management strategy to 'buffer' power so that there is a reservoir available for the times when harvesting is not providing enough input to power the system completely.

According to a further aspect of the invention, a power management of the system is coupled with the harvesting circuit to ensure that energy is available when it is needed, e.g. when the steel is being processed.

The package proposed not only allows condition monitoring to be deployed conveniently, but also allows the measurement of load, vibration, acoustic emission and temperature for use by advanced condition monitoring systems.

This invention describes a wireless, embedded sensor module that is simple to install, is robust in the environment, can generate its own power and provides measurements of vibration, acoustic emission, load and temperature from the bearing/housing. The primary purpose of this device is condition monitoring, however, the same device can be adapted to provide information used by the process control system to optimize the quality of steel production.

The above description of the invention as well as the appended claims, figures and the following description of a preferred embodiment show multiple characterizing features of the invention in specific combinations. The skilled person will easily be able to consider further combinations or subcombinations of these features in order to adapt the invention as defined in the claims to his or her specific needs.

### Brief Description of the Drawings

- Fig. 1: is a bearing housing of a continuous caster bearing equipped with a sensor module according to the invention covered by a metal plate;
- Fig. 2: is the bearing housing of Fig. 1 with the metal plate removed;
- Fig. 3: shows an embedded portion of the sensor module according to the invention with its plastic housing;
- Fig. 4: shows the sensor module according to Fig. 3 with the plastic housing removed; and
- Fig. 5: is a sectional view of the sensor module and the bearing housing showing a clamping mechanism.

### Detailed Description of the Embodiment

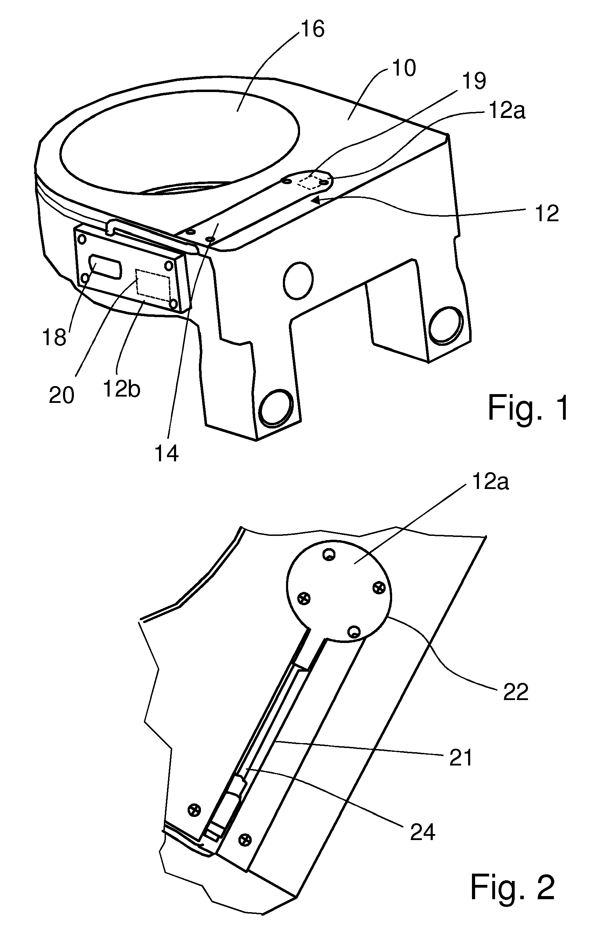

Fig. 1 is a bearing housing 10 of a continuous caster bearing equipped with a sensor module 12 according to the invention covered by a metal plate 14. A bore 16 of the housing 10 is configured to receive an outer ring of a continuous caster bearing to be monitored by the monitoring unit according to the invention (not illustrated).

The sensor module 12 comprises an embedded portion 12a which is embedded into the bulk steel material of the bearing housing 10 and an outside portion 12b including an antenna 18 of a wireless transceiver 19 and an energy harvesting circuit 20 formed as a thermoelectric generator for harvesting power from a local environment.

Fig. 2 is a detailed view of the bearing housing 10 of Fig. 1 with the metal plate 14 removed. A groove 21 in an upper surface of the bearing housing 10 connects a hole 22 receiving the cylindrical embedded portion 12a and the outside portion 12b and guides cables 24 connecting the portions 12a, 12b, wherein the cables 24 are protected by a heat-proof shroud.

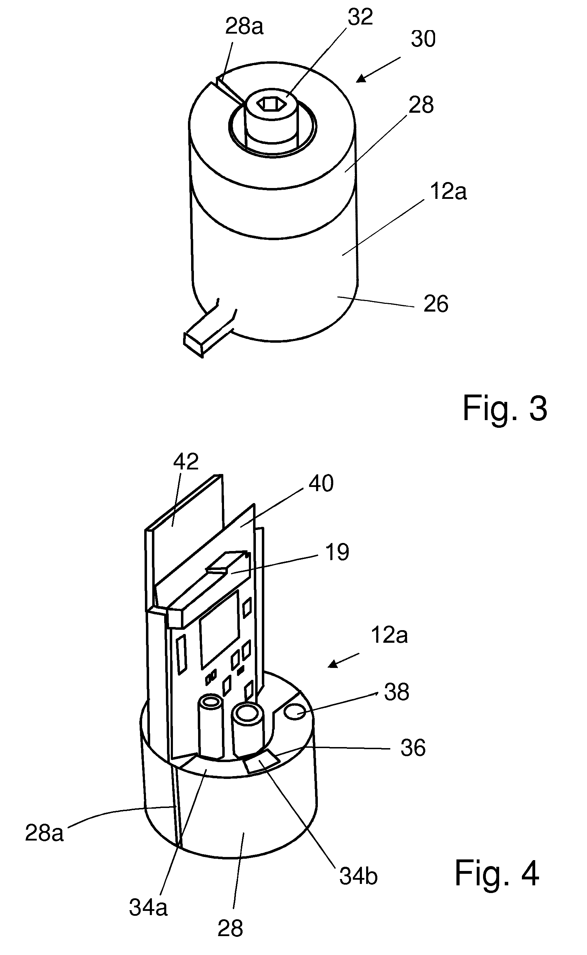

Fig. 3 shows the essentially cylindrical embedded portion 12a of the sensor module 12 according to the invention turned upside down. An upper part of the embedded portion is covered with a plastic housing 26, whereas the axially lower part to be placed close to a bottom of the circular bore hole 22 receiving the embedded portion 12a is the radially outer surface of a steel clamping ring 28, wherein the clamping ring 28 is provided with a gap 28a allowing for an elastic expansion of the clamping ring 28.

The material of the plastic housing 26 is chosen so as to withstand both high temperatures and liquids including water and solvents. It also needs to be able to withstand transmission of shock and vibration through the bearing housing 10. Preferably, a high performance plastic such as PPS GF40 is used.

The clamping ring 28 is part of a clamping mechanism 30 generating clamping force acting on the cylindrical internal lateral surfaces of the hole 22, which will be described in further detail below. The radial expansion of the clamping ring 28 as a result of a tightening of the clamping mechanism 30 leads to a reliable and robust force-fitting fixation of the embedded portion 12a of the sensor module 12 in the hole 22. The hole 22 is formed as a through-hole in order to make a bolt 32 for tightening the clamping mechanism 30 accessible.

The installation of the module 12 through the use of a pre-machined hole 22 allows for a simple and cheap method of instrumenting a steel caster or rolling mill housing 10/bearing. It also allows for easy field replacement during caster/rolling mill maintenance. By inserting the module 12 into the bearing housing 10, it is both protected from the worst of the local manufacturing environment and is also placed close to the source of the signals of interest.

Fig. 4 shows the sensor module according to Fig. 3 with the plastic housing 26 removed. The embedded portion 12a comprises multiple sensors including strain sensors 34a, 34b described in further detail below, a temperature sensor 36 and/or vibration or acoustic emission sensors sensor 38.

Further, a printed circuit board 40 with components an electronic subsystem within the module 12 that provides the signal acquisition capability is provided. The analog signals from the piezo sensors 34a, 34b are processed in both the analog and digital domain to provide values that can be used for trending, alarming etc. The signal processing may be split between the module and a higher-end computer system further on in the data transmission process. Sensitive parts of the wireless transceiver 19 for exchanging data with an electronic processing system are also provided on the printed circuit board 40.

Further, a super capacitor 42 is arranged in the plastic housing 26 of the embedded portion of the sensor module 12. The signal processing implemented on the printed circuit board 40 includes a power management of the system which is coupled with the harvesting circuit 20 to ensure that energy is available when it is needed, e.g. when the steel is being processed.

The temperature sensor 36 is included to provide measurement of the bearing condition critical to lubrication life.

The strain sensors 34a, 34b are formed as piezoelectric strain bridges which are directly bonded to the clamping ring 28 and connected so as to form a resistive bridge.

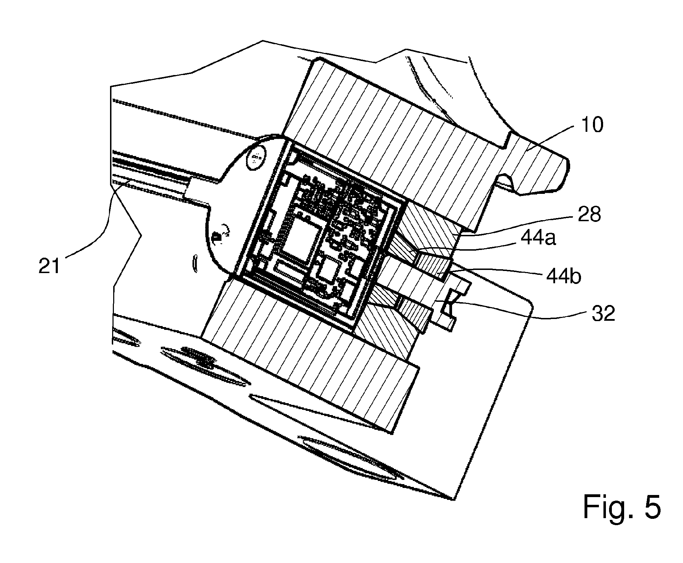

Fig. 5 is a sectional view of the sensor module 12 and the bearing housing 10 showing the clamping mechanism 30. The clamping mechanism 30 comprises the clamping ring 28 with two conical inner surfaces opened in opposite directions and interacting with two conical inner parts formed as a cone 44a with an internal thread and a cone 44b with a through hole. The bolt 32 engages with the internal thread of the cone 44a and is provided as a means for axially pressing the cones 44a, 44b together into the clamping ring 28 for radially widening the clamping ring 28.

The overall configuration of the sensor module 12 according to the invention allows for a robust product that can acquire high quality data on the operation of the bearing. Using low-power, wireless meshing technology for the wireless transceiver 19, there is no need for cables so reducing the installation costs and improving the reliability of the system. The low-power technology also allows for the system to be able to run from power harvested from the local environment. In the preferred embodiment of the invention, wireless HART technology is used. This is a low power, industrial, mesh network based on the IEEE 802.15.4 standard, which is very robust in industrial environments.

## Claims

1. Sensor module for monitoring bearings in steel industry applications comprising an embedded portion (12a) for being fitted into a hole (22) in a bearing component (10) of the bearing to be monitored, wherein the embedded portion (12a) comprises at least one sensor (34a, 34b, 36, 38), **characterized in that** the embedded portion (12a) further comprises a clamping mechanism (30) generating a clamping force acting on at least two opposing lateral internal faces of the hole (22).

2. Sensor module according to claim 1,
**characterized in that** the clamping mechanism (30) comprises a clamping ring (28) with at least one conical inner surface interacting with at least one conical inner part (44a, 44b) and means (32) for pressing the conical inner part (44a, 44b) into the clamping ring (28) for widening the clamping ring (28).

3. Sensor module according to claim 2,
**characterized in that** the at least one sensor (34a, 34b, 36, 38) is bonded to the clamping ring (28).

4. Sensor module according to claim 3,
**characterized by** comprising at least two strain bridges(34a, 34b) bonded to the clamping ring (28) and connected so as to form a resistive bridge.

5. Sensor module according to one of the preceding claims, **characterized by** comprising at least one temperature sensor (36).

6. Sensor module according to one of the preceding claims, **characterized by** further comprising a wireless transceiver (19) for exchanging data with an electronic processing system.

7. Sensor module according to claim 6,
**characterized in that** at least an antenna (18) of the wireless transceiver (19) is arranged outside of the hole (22).

8. Sensor module according to one of the preceding claims,
**characterized by** further comprising an energy harvesting circuit (20) for harvesting power from a local environment.

9. Sensor module according to claim 8,
**characterized in that** the energy harvesting circuit (20) comprises a thermoelectric generator.
